# FASCICULE DE BREVET EUROPEEN

(11) **EP 2 168 797 B1**
(45) Date de publication et mention de la délivrance du brevet: **01.12.2010**
(21) Numéro de dépôt: 09305867.5
(22) Date de dépôt: 17.09.2009
(51) Int. Cl.: B60J 7/02, B60J 5/10

(54) **Dispositif d'ouverture ou fermeture d'une vitre de véhicule automobile**
Öffnungs- und Schließvorrichtung eines Fahrzeugfensters
Device for opening and closing a vehicle window

(30) Priorité: 30.09.2008 FR 0856594
(43) Date de publication de la demande: 31.03.2010
(73) Titulaire: Renault s.a.s., 92100 Boulogne-Billancourt (FR)
(72) Inventeur: Leroyer, Bruno, 78910 Orgerus (FR)

(56) Documents cités:
- EP-A- 1 234 756
- DE-A1-102005 021 117
- FR-A- 2 893 344
- US-A1- 2005 222 732
- US-B1- 7 219 945

## Description

La présente invention concerne un dispositif d'ouverture et fermeture d'une vitre de véhicule automobile tel que décrit dans le document EP1234756.

L'invention concerne plus précisément un dispositif d'ouverture et fermeture d'une vitre de portillon arrière d'un véhicule automobile comprenant également un ouvrant de pavillon de type girafon. L'invention concerne aussi un procédé d'ouverture et fermeture d'une telle vitre.

Certains véhicules automobiles, notamment des véhicules utilitaires ou de loisirs, présentent une ouverture ménagée dans la zone arrière du pavillon et pouvant être obturée par un ouvrant. Cet ouvrant est alors appelé girafon.

Le document FR2876959 propose ainsi un ouvrant de véhicule, du type girafon, monté mobile en déplacement entre une position fermée et une position ouverte.

En plus d'un girafon, le véhicule peut comporter un portillon arrière comportant une vitre pouvant monter ou descendre dans ce portillon, et venant obturer l'accès arrière du véhicule entre le portillon et le girafon. Un tel véhicule est décrit dans le document DE10028777. Cependant la vitre de portillon associée au girafon nécessite une gestion d'ouverture et fermeture particulière afin de pouvoir ouvrir et fermer le girafon et/ou le portillon sans endommager la vitre qui, en position fermée, doit pouvoir être engagée dans un joint d'étanchéité du girafon afin d'éviter toute fuite vers l'intérieur du véhicule.

La présente invention a donc pour objet de fournir un dispositif d'ouverture et fermeture d'une vitre amélioré en proposant un procédé de gestion de l'ouverture et la fermeture de la vitre adapté à cette structure de véhicule.

A cet effet l'invention propose un dispositif d'ouverture et fermeture d'une vitre d'un véhicule automobile comprenant un ouvrant de pavillon et un portillon arrière dans lequel est monté un mécanisme permettant de faire coulisser ladite vitre, ledit dispositif comprenant un premier élément de commande d'ouverture du portillon, un premier élément de détection de la position du girafon, un second élément de détection de position du portillon, au moins un second élément de commande d'ouverture de la vitre, les premiers et seconds éléments de commande et de détection étant reliés à un système de gestion apte à envoyer un signal d'ouverture ou de fermeture au mécanisme d'ouverture de la vitre.

Selon d'autres caractéristiques de l'invention, le bord transversal arrière de l'ouvrant de pavillon peut comporter au moins un joint d'étanchéité formant un U ouvert sensiblement vers le bas et apte à recevoir le bord supérieure de la vitre en position fermée.

Le mécanisme d'ouverture de l'ouvrant de pavillon peut être adapté à déplacer le bord transversal arrière de l'ouvrant de pavillon lors de l'ouverture de l'ouvrant selon une direction sensiblement verticale de manière à dégager le joint d'étanchéité de la vitre.

L'invention concerne également un procédé de gestion du mécanisme d'ouverture ou fermeture d'un tel dispositif. Lorsque l'ouverture de l'ouvrant de pavillon est détectée, le procédé vérifie si la vitre est dans une position inférieure ou égale à une position limite, et dans le cas contraire le procédé comporte une étape d'abaissement de la vitre jusqu'à la position limite.

Le procédé peut vérifier, lorsqu'une action sur la commande d'ouverture du portillon est détectée, si la vitre est dans une position inférieure ou égale à la position limite, dans le cas contraire, le procédé peut comporter une étape d'abaissement de la vitre jusqu'à la position limite, puis lorsque la condition sur la position limite de la vitre est satisfaite, le procédé peut comprendre une étape de déverrouillage du portillon.

Le procédé, lorsque la fermeture de l'ouvrant de pavillon est détectée, peut vérifier si le portillon est verrouillé et si la vitre est située dans la position limite, si ces conditions sont vérifiées, le procédé peut comporter une étape de fermeture de la vitre.

Le procédé, lorsque la fermeture du portillon est détectée, peut effectuer une étape de verrouillage du portillon puis, si la fermeture de l'ouvrant de pavillon est détectée et si la vitre est située dans la position limite, le procédé peut effectuer une étape de fermeture de la vitre.

Selon une autre caractéristique de l'invention, le procédé, lorsqu'une demande de fermeture de la vitre est détectée, peut vérifier si le girafon est ouvert ou si le portillon est déverrouillé, puis si l'une des deux conditions est vérifiée, le procédé peut comporter une étape de remontée partielle de la vitre jusqu'à la position limite.

D'autres caractéristiques et avantages de l'invention apparaîtront à la lecture de la description d'un exemple qui va maintenant en être fait en se référant aux dessins annexés, sur lesquels :
La figure 1 est une vue arrière de véhicule comportant un girafon, un portillon et une vitre selon l'invention ;
La figure 2 est une vue en coupe longitudinale du girafon et position fermé et semi ouverte, associé à la vitre de l'invention ;
Les figures 3 à 5 sont des organigrammes représentant le procédé de gestion de l'ouverture et de la fermeture de la vitre de l'invention.

Dans la suite de la description, on définit par X, Y, Z les directions longitudinale, transversale et verticale du véhicule automobile. Sur les figures, la direction X est dirigée vers l'arrière du véhicule. Les termes avant et arrière se réfèrent respectivement à l'avant et l'arrière du véhicule.

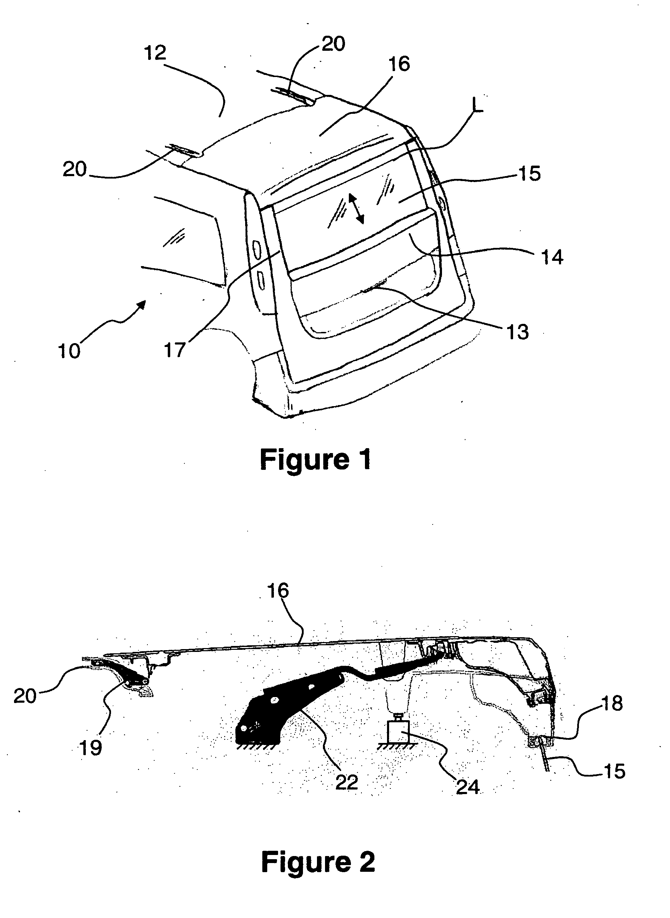

En référence aux figures 1 et 2, un véhicule automobile 10 comprend un pavillon 12 et une face arrière formée d'un portillon 14 associé à une vitre de portillon 15.

Dans cet exemple, le portillon arrière 14 est articulé sur un coté de la structure du véhicule de manière à pouvoir pivoter autour d'un axe latéral sensiblement vertical. Le portillon 14 comprend une commande d'ouverture 13 permettant de déverrouiller le portillon 14.

La vitre 15 est montée coulissante dans ce portillon 14, guidée par un moyen de guidage 17 prolongeant verticalement le portillon 14 le long d'un bord latéral de la vitre 15. Le portillon peut également présenter deux moyens de guidage permettant de guider chaque bord latéral de la vitre 15.

La vitre 15 est associée à un mécanisme d'ouverture et de fermeture électrique (non représenté) situé dans le portillon 14, et pouvant être activé par au moins un élément de commande situé à l'intérieur du véhicule 10.

A proximité immédiate du bord supérieur de la vitre de portillon 15, le pavillon est pourvu d'un ouvrant 16 qui obture une ouverture. Dans la position fermée représentée à la figure 1, l'ouvrant 16 s'étend dans la continuité du pavillon 12 au dessus de l'ouverture qu'il obture complètement. Le bord transversal arrière de l'ouvrant 16 comporte au moins un joint d'étanchéité 18 formant un U ouvert sensiblement vers le bas, et apte à recevoir le bord supérieure de la vitre en position fermée

Cet ouvrant 16, est monté en rotation sur deux chariots 19 coulissant principalement suivant un mouvement de translation, chacun dans un rail 20 solidaire de la face supérieure du pavillon 12. Chaque rail 20 s'étend dans la direction longitudinale du véhicule depuis le bord transversal avant de l'ouverture situé du côté avant du véhicule, sur une distance sensiblement identique à la dimension de l'ouvrant 16 dans la direction longitudinale.

Les chariots 19 et les rails 20 forment ainsi des moyens de guidage en débattement principalement longitudinal de l'ouvrant aptes à le guider entre ses positions fermée et ouverte.

L'ouvrant 16 est, d'autre part, articulé à l'extrémité d'une bielle 22, l'autre extrémité de la bielle 22 étant articulée à la structure du véhicule.

Chaque bielle 22 est articulée à l'ouvrant et à la structure du véhicule de manière à ce que, dans la position fermée, les axes d'articulation de la bielle 22 soient disposés sensiblement dans un même plan horizontal. Les bielles 22 permettent ainsi un déplacement de l'ouvrant entre ses positions ouverte et fermée avec un débattement longitudinal et vertical.

Grâce à ce mécanisme, l'ouverture de l'ouvrant 16 est réalisée de la manière suivante représentée à la figure 2. L'ouvrant est libéré de la partie arrière du véhicule 10. Le mouvement du girafon 16 suivant la cinématique définie par le mécanisme des bielles 22 et des chariots 19 décrit en premier lieu principalement un arc de cercle vers le haut puis vers l'avant du véhicule. Ce mécanisme permet avantageusement de dégager le joint d'étanchéité 18 en U de la vitre 15 en position fermée selon une direction sensiblement tangente à ladite vitre, avant que le girafon se déplace vers l'avant du véhicule, limitant ainsi les efforts exercés par le girafon sur la vitre.

La fermeture de l'ouvrant 16 est réalisée inversement à l'ouverture. Cependant, lorsque l'ouvrant arrive proche de sa position fermée, des plots de centrage (non représentés) permettent la mise en position de l'ouvrant par rapport au pavillon. Cependant si la vitre se situe en position haute, l'engagement de la vitre dans le joint s'effectue avant que l'ouvrant soit correctement centré. Ainsi, afin d'éviter l'endommagement de la vitre ou du joint pouvant être entrainé par un mauvais positionnement de l'ouvrant par rapport à la vitre, cette dernière est préférentiellement située dans une position limite L légèrement abaissée d'environ 3 centimètres par rapport à la position haute fermée de la vitre afin que l'ouvrant n'entre pas en contact avec la vitre, la fermeture de ladite vitre s'effectuant après la fermeture de l'ouvrant.

A cet effet le véhicule est muni d'un contacteur électrique 24 associé à un système de gestion du mécanisme d'ouverture de la vitre. Le contacteur 24, par exemple du type poussoir, est situé sur la structure du véhicule, et coopère avec une portion de l'ouvrant 16. Ce contacteur permet de détecter l'ouverture de l'ouvrant et ainsi d'interdire la remontée de la vitre au-delà de la position limite L tant que l'ouvrant 16 de pavillon n'est pas refermé.

Selon une autre caractéristique de l'invention, l'ouverture du portillon 14 ne peut être effectuée que lorsque ce dernier est déverrouillé. En effet, lorsque le girafon est fermé et que la vitre est remontée, cette dernière est engagée dans le joint du girafon et l'ouverture du portillon ne peut être effectuée. Ainsi lorsque l'utilisateur actionne la commande 13 d'ouverture du portillon 14, le système de gestion d'ouverture de la vitre abaisse cette dernière dans la position limite L puis autorise le déverrouillage du portillon. De plus, tant que le portillon est déverrouillé le système de gestion interdit la remontée de vitre au-delà de la position limite L.

Selon une autre caractéristique de l'invention, lorsque le girafon 16 est refermé et que le portillon 14 est verrouillé (respectivement lorsque le portillon est refermé et que le girafon est en position fermé), si la vitre 15 se situe dans la position limite L, le système de gestion remonte automatiquement la vitre 15 en position fermée engageant ainsi la vitre dans le joint d'étanchéité 18 du girafon selon la direction sensiblement verticale de translation de la vitre adaptée à la forme du joint en U.

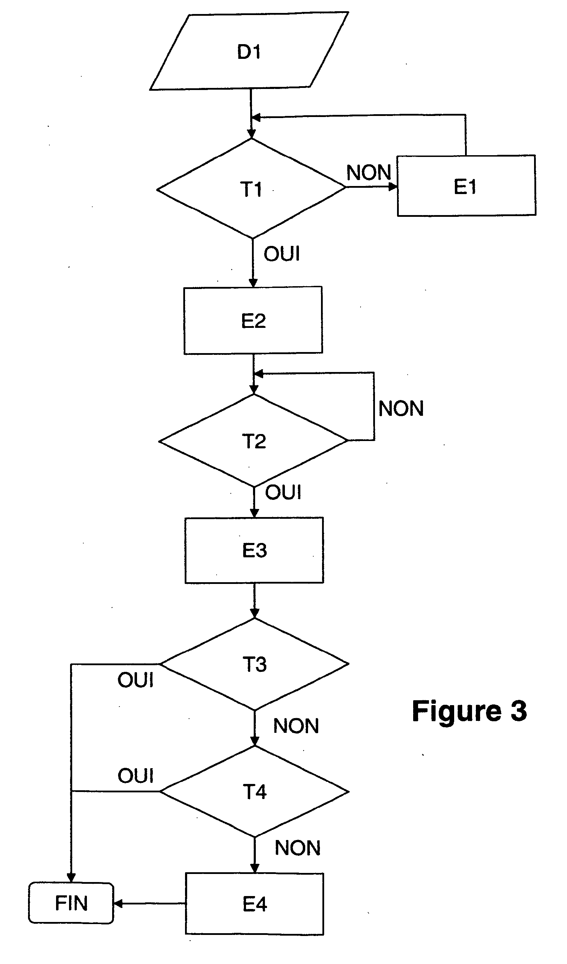

Le procédé de gestion du mécanisme d'ouverture et fermeture de la vitre 15 du portillon 14 peut donc être décrit par les organigrammes représentés aux figures 3 à 5.

L'organigramme de la figure 3 représente le procédé de gestion lors d'une action D1 sur la commande 13 d'ouverture du portillon. Le procédé vérifie dans un premier temps si la vitre 15 est dans une position inférieure ou égale à la position limite L (T1), si ce n'est pas le cas le procédé comporte une étape E1 qui abaisse la vitre jusqu'à la position limite L. Une fois que la condition (T1) sur la position limite de la vitre est satisfaite le procédé comprend une étape E2 de déverrouillage du portillon 14. Ensuite, dès la fermeture du portillon est détectée (T2), le procédé effectue le verrouillage du portillon à l'étape E3. Enfin si le girafon est fermé (T3) et si la vitre est située dans la position limite L (T4), le procédé effectue une étape E4 de fermeture de la vitre. Si une des deux conditions précédentes T3 ou T4 n'est pas vérifiée, la vitre reste dans sa position et cette partie du procédé de gestion de la vitre relative à la commande du portillon est terminée (FIN).

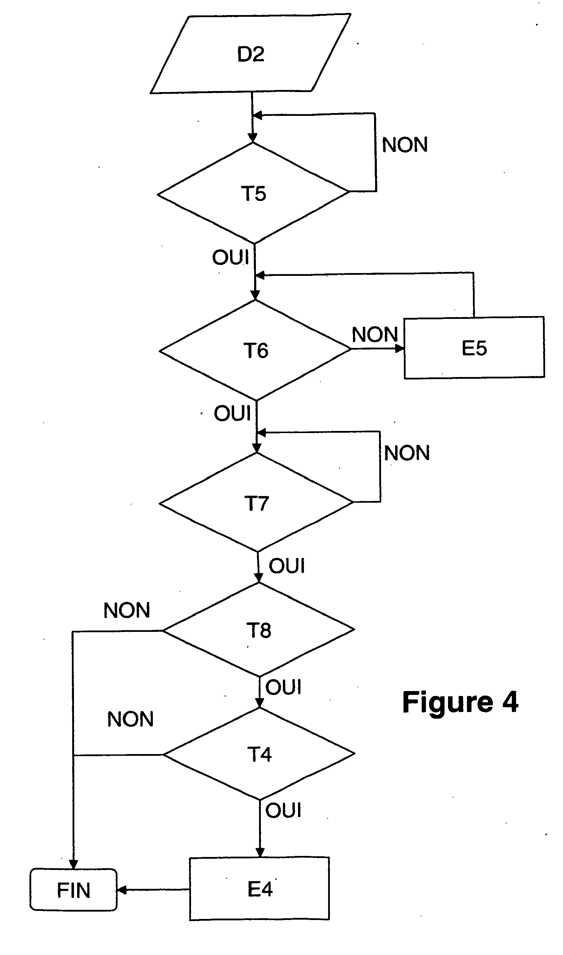

L'organigramme de la figure 4 représente le procédé de gestion lors de l'ouverture D2 du girafon. Lorsque l'ouverture détectée (T5), notamment au moyen du contacteur 24, le procédé vérifie si la vitre 15 est dans une position inférieure ou égale à la position limite L (T6), et si ce n'est pas le cas le procédé comporte une étape E5 qui abaisse la vitre jusqu'à la position limite L. Une fois que la condition (T6) sur la position limite de la vitre est satisfaite, dès que la fermeture du girafon est détectée (T7), le procédé vérifie, similairement à l'organigramme de la figure 4, si le portillon est verrouillé (T8) et si la vitre est située dans la position limite L (T4), afin d'effectuer une étape E4 de fermeture de la vitre. Si une des deux conditions précédentes T8 ou T4 n'est pas vérifiée, la vitre reste dans sa position et cette partie du procédé de gestion de la vitre relative à l'ouverture du girafon est terminée (FIN).

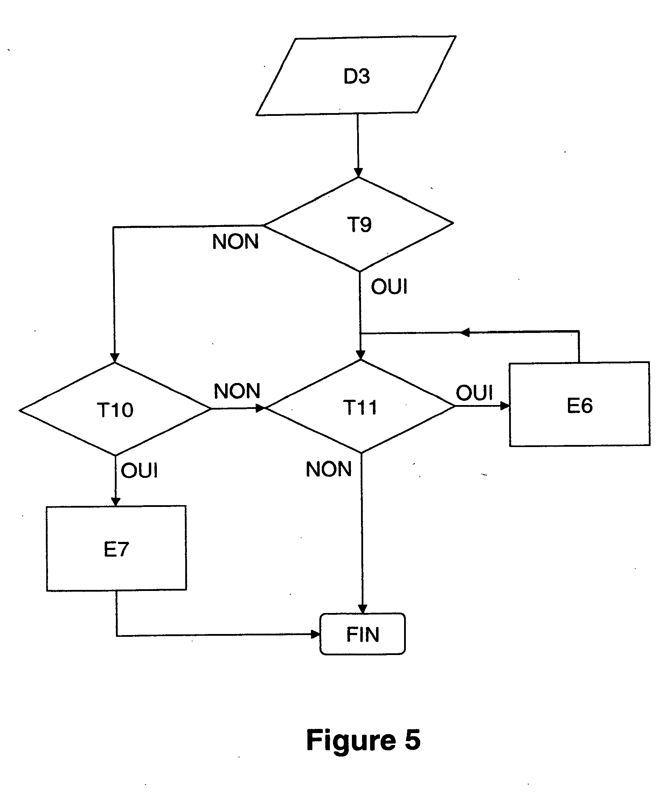

L'organigramme de la figure 5 représente le procédé de gestion lors d'une demande D3 de fermeture de la vitre 15 du portillon 14. Le procédé vérifie si le girafon est ouvert (T9) ou si le portillon est déverrouillé (T10) auquel cas, tant que la position limite L n'est pas atteinte (T11), le procédé autorise la remontée partielle E6 de la vitre. Par contre si le girafon n'est pas ouvert (T9) ou si le portillon n'est pas déverrouillé (T10) la vitre est remontée sans restriction jusqu'à la fin de la demande (FIN).

Cette invention permet avantageusement d'associer un girafon à un portillon équipé d'une vitre à ouverture commandé, tout en permettant l'ouverture et la fermeture de chaque organe sans rencontrer d'interférence entre la vitre et le girafon grâce à un procédé de gestion et un mécanisme de girafon simple.

## Revendications

1. Dispositif d'ouverture et fermeture d'une vitre (15) d'un véhicule automobile (10) comprenant un ouvrant (16) de pavillon (12) et un portillon arrière (14) dans lequel est monté un mécanisme permettant de faire coulisser ladite vitre, **caractérisé en ce que** le dispositif comprend un premier élément de commande (13) d'ouverture du portillon, un premier élément de détection (24) de la position du girafon, un second élément de détection de position du portillon, au moins un second élément de commande d'ouverture de la vitre, les premiers et seconds éléments de commande et de détection (13, 24) étant reliés à un système de gestion apte à envoyer un signal d'ouverture ou de fermeture au mécanisme d'ouverture de la vitre.

2. Dispositif d'ouverture et de fermeture d'une vitre (15) selon la revendication précédente, **caractérisé en ce que** le bord transversal arrière de l'ouvrant de pavillon (16) comporte au moins un joint d'étanchéité (18) formant un U ouvert sensiblement vers le bas, apte à recevoir le bord supérieure de la vitre (15) en position fermée.

3. Dispositif d'ouverture et de fermeture d'une vitre (15) selon la revendication précédente, **caractérisé en ce que** le mécanisme d'ouverture (19, 20, 22) de l'ouvrant de pavillon est adapté à déplacer le bord transversal arrière de l'ouvrant de pavillon (16) lors de l'ouverture de l'ouvrant selon une direction sensiblement verticale de manière à dégager le joint d'étanchéité (18) de la vitre (15).

4. Procédé de gestion du mécanisme d'ouverture ou fermeture d'un dispositif selon une des revendications précédentes, **caractérisé en ce que**, lorsque l'ouverture (D2) de l'ouvrant de pavillon est détectée (T5), le procédé vérifie (T6) si la vitre (15) est dans une position inférieure ou égale à une position limite (L), et dans le cas contraire le procédé comporte une étape (E5) d'abaissement de la vitre jusqu'à la position limite (L).

5. Procédé de gestion selon la revendication 4, **caractérisé en ce que**, lorsqu'une action (D1) sur la commande (13) d'ouverture du portillon est détectée, le procédé vérifie (T1) si la vitre (15) est dans une position inférieure ou égale à la position limite (L), dans le cas contraire, le procédé comporte une étape (E1) d'abaissement de la vitre jusqu'à la position limite (L), puis lorsque la condition (T1) sur la position limite de la vitre est satisfaite, le procédé comprend une étape (E2) de déverrouillage du portillon (14).

6. Procédé de gestion selon la revendication 5, **caractérisé en ce que** lorsque la fermeture de l'ouvrant de pavillon est détectée (T7), le procédé vérifie si le portillon est verrouillé (T8) et si la vitre est située dans la position limite (L) (T4), si ces conditions (T8, T4) sont vérifiées, le procédé comporte une étape (E4) de fermeture de la vitre.

7. Procédé de gestion selon une des revendications 5 ou 6, **caractérisé en ce que** lorsque la fermeture du portillon est détectée (T2), le procédé effectue une étape de verrouillage du portillon (E3), puis si la fermeture de l'ouvrant de pavillon est détectée (T3) et si la vitre est située dans la position limite (L) (T4), le procédé effectue une étape (E4) de fermeture de la vitre.

8. Procédé de gestion selon une des revendications 5 à 7, **caractérisé en ce que** lorsqu'une demande (D3) de fermeture de la vitre (15) est détectée, le procédé vérifie si le girafon est ouvert (T9) ou si le portillon est déverrouillé (T10) puis si l'une des deux conditions (T9, T10) est vérifiée, le procédé comporte une étape de remontée partielle (E6) de la vitre tant que la position limite (L) n'est pas atteinte (T11).

## Claims

1. Device for opening and closing a window (15) of a motor vehicle (10) comprising an opening element (16) of a roof (12) and a tailgate (14) in which is mounted a mechanism making it possible to cause the said window to slide, **characterized in that** the device comprises a first element (13) for controlling the opening of the tailgate, a first element (24) for detecting the position of the rear sunroof, a second element for detecting the position of the tailgate, at least one second element for controlling the opening of the window, the first and second elements of control and of detection (13, 24) being connected to a management system capable of sending an opening or closing signal to the mechanism for opening the window.

2. Device for opening and closing a window (15) according to the preceding claim, **characterized in that** the rear transverse edge of the roof opening element (16) comprises at least one seal (18) forming a U open substantially downwards, capable of receiving the top edge of the window (15) in the closed position.

3. Device for opening and closing a window (15) according to the preceding claim, **characterized in that** the mechanism (19, 20, 22) for opening the roof opening element is suitable for moving the rear transverse edge of the roof opening element (16) when the opening element is opened in a substantially vertical direction so as to disengage the seal (18) from the window (15).

4. Method for managing the mechanism for opening or closing a device according to one of the preceding claims, **characterized in that**, when the opening (D2) of the roof opening element is detected (T5), the method verifies (T6) whether the window (15) is in a bottom position or equal to a limit position (L), and, if it is not, the method comprises a step (E5) of lowering the window to the limit position (L).

5. Management method according to Claim 4, **characterized in that**, when an action (D1) on the control (13) for opening the tailgate is detected, the method verifies (T1) whether the window (15) is in a bottom position or equal to the limit position (L), if it is not, the method comprises a step (E1) of lowering the window to the limit position (L), then when the condition (T1) on the limit position of the window is met, the method comprises a step (E2) of unlocking the tailgate (14).

6. Management method according to Claim 5, **characterized in that**, when the closing of the roof opening element is detected (T7), the method verifies whether the tailgate is locked (T8) and whether the window is situated in the limit position (L) (T4), if these conditions (T8, T4) are verified, the method comprises a step (E4) of closing the window.

7. Management method according to one of Claims 5 or 6, **characterized in that**, when the closing of the tailgate is detected (T2), the method carries out a step of locking the tailgate (E3), then, if the closing of the roof opening element is detected (T3) and if the window is situated in the limit position (L) (T4), the method carries out a step (E4) of closing the window.

8. Management method according to one of Claims 5 to 7, **characterized in that**, when a request (D3) to close the window (15) is detected, the method verifies whether the rear sunroof is open (T9) or whether the tailgate is unlocked (T10) then, if one of the two conditions (T9, T10) is verified, the method comprises a step of partially raising (E6) the window provided that the limit position (L) is not reached (T11).

## Patentansprüche

1. Vorrichtung zum Öffnen und Schließen eines Fensters (15) eines Kraftfahrzeugs (10), das eine Öffnungseinrichtung (16) eines Verdecks (12) und eine hintere Türklappe (14) aufweist, in die ein Mechanismus eingebaut ist, der es ermöglicht, das Fenster zu schieben, **dadurch gekennzeichnet, dass** die Vorrichtung ein erstes Steuerelement (13) zum Öffnen der Türklappe, ein erstes Erfassungselement (24) der Stellung der Leiterklappe, ein zweites Erfassungselement der Stellung der Türklappe, mindestens ein zweites Steuerelement zum Öffnen des Fensters enthält, wobei die ersten und zweiten Steuer- und Erfassungselemente (13, 24) mit einem Verwaltungssystem verbunden sind, das ein Öffnungs- oder Schließsignal an den Öffnungsmechanismus des Fensters senden kann.

2. Vorrichtung zum Öffnen und Schließen eines Fensters (15) nach dem vorhergehenden Anspruch, **dadurch gekennzeichnet, dass** der hintere Querrand der Verdecköffnungseinrichtung (16) mindestens eine ein im Wesentlichen nach unten offenes U bildende Dichtung (18) aufweist, die den oberen Rand des Fensters (15) in der geschlossenen Stellung aufnehmen kann.

3. Vorrichtung zum Öffnen und Schließen eines Fensters (15) nach dem vorhergehenden Anspruch, **dadurch gekennzeichnet, dass** der Öffnungsmechanismus (19, 20, 22) der Verdecköffnungseinrichtung den hinteren Querrand der Verdecköffnungseinrichtung (16) beim Öffnen der Öffnungseinrichtung in einer im Wesentlichen senkrechten Richtung verschieben kann, um die Dichtung (18) vom Fenster (15) zu lösen.

4. Verfahren zur Verwaltung des Mechanismus zum Öffnen und Schließen einer Vorrichtung nach einem der vorhergehenden Ansprüche, **dadurch gekennzeichnet, dass**, wenn die Öffnung (D2) der Verdecköffnungseinrichtung erfasst wird (T5), das Verfahren überprüft (T6), ob das Fenster (15) in einer Stellung unterhalb oder gleich einer Grenzstellung (L) ist, und im gegenteiligen Fall das Verfahren einen Schritt (E5) des Senkens des Fensters bis in die Grenzstellung (L) aufweist.

5. Verwaltungsverfahren nach Anspruch 4, **dadurch gekennzeichnet, dass**, wenn eine Einwirkung (D1) auf die Öffnungssteuerung (13) der Türklappe erfasst wird, das Verfahren überprüft (T1), ob das Fenster (15) in einer Stellung unterhalb oder gleich der Grenzstellung (L) ist, im gegenteiligen Fall das Verfahren einen Schritt (E1) des Senkens des Fensters bis in die Grenzstellung (L) aufweist, dann, wenn die Bedingung (T1) der Grenzstellung des Fensters erfüllt ist, das Verfahren einen Schritt (E2) der Entriegelung der Türklappe (14) aufweist.

6. Verwaltungsverfahren nach Anspruch 5, **dadurch gekennzeichnet, dass**, wenn das Schließen der Verdecköffnungseinrichtung erfasst wird (T7), das Verfahren überprüft, ob die Türklappe verriegelt ist (T8) und ob das Fenster sich in der Grenzstellung (L) befindet (T4), wenn diese Bedingungen (T8, T4) erfüllt sind, das Verfahren einen Schritt (E4) des Schließens des Fensters aufweist.

7. Verwaltungsverfahren nach einem der Ansprüche 5 oder 6, **dadurch gekennzeichnet, dass**, wenn das Schließen der Türklappe erfasst wird (T2), das Verfahren einen Schritt der Verriegelung der Türklappe (E3) durchführt, dann, wenn das Schließen der Verdecköffnungseinrichtung erfasst wird (T3) und wenn das Fenster sich in der Grenzstellung (L) befindet (T4), das Verfahren einen Schritt (E4) des Schließens des Fensters durchführt.

8. Verwaltungsverfahren nach einem der Ansprüche 5 bis 7, **dadurch gekennzeichnet, dass**, wenn eine Forderung (D3) des Schließens des Fensters (15) erfasst wird, das Verfahren überprüft, ob die Leiterklappe offen (T9) oder ob die Türklappe entriegelt ist (T10), dann, wenn eine der zwei Bedingungen (T9, T10) erfüllt ist, das Verfahren einen Schritt des teilweisen Anhebens (E6) des Fensters aufweist, so lange die Grenzstellung (L) nicht erreicht ist (T11).
